# EUROPÄISCHE PATENTSCHRIFT

(11) **EP 2 628 936 B1**
(45) Veröffentlichungstag und Bekanntmachung des Hinweises auf die Patenterteilung: **22.05.2019**
(21) Anmeldenummer: 13000624.0
(22) Anmeldetag: 06.02.2013
(51) Int. Cl.: F02K 1/64, F02K 1/76

(54) **Fluggasturbinenschubumkehrvorrichtung**
Aviation gas turbine thrust reversing device
Dispositif d'inversion de poussée de turbine à gaz d'avion

(30) Priorität: 14.02.2012 DE 102012002885
(43) Veröffentlichungstag der Anmeldung: 21.08.2013
(73) Patentinhaber: Rolls-Royce Deutschland Ltd & Co KG, 15827 Blankenfelde-Mahlow (DE)
(72) Erfinder: Todorovic, Predrag, 10437 Berlin (DE)
(74) Vertreter: Hoefer & Partner Patentanwälte mbB

(56) Entgegenhaltungen:
- EP-A1- 1 843 031
- WO-A1-2007/099333
- WO-A1-2008/045056
- WO-A1-2010/139877
- FR-A1- 2 922 981

## Beschreibung

Die Erfindung bezieht sich auf eine Fluggasturbinenschubumkehrvorrichtung mit einem Triebwerk, mit einer Triebwerksverkleidung sowie mit mehreren, am Umfangsbereich angeordneten, lageveränderbaren Umlenkelementen.

Aus dem Stand der Technik ist bekannt, dass Schubumkehrvorrichtungen einen Hebelmechanismus innerhalb des Nebenstromkanals aufweisen. Dieser Hebelmechanismus verschwenkt sich beim Übergang in die Schubumkehrposition, um Umlenkelemente und Blockagetüren in den Strömungsweg einzubringen. Der Hebelmechanismus umfasst Zugelemente, welche die Blockagetüren in ihre Position ziehen, wenn der hintere Bereich der Triebwerksverkleidung nach hinten verschoben wird. Dabei werden die Blockagetüren in ihre vollständige Blockagestellung verschwenkt, in welcher sie die Luftströmung zur Schubumkehr umlenken. Gleichzeitig wird durch die axiale Verschiebung des hinteren Bereichs der Triebwerksverkleidung die Luftströmung durch den sich bildenden ringförmigen Freiraum geleitet, um die Schubumkehr zu bewirken. Als nachteilig erweist es sich dabei, dass der Hebelmechanismus sowie seine zugeordneten Lagerungen die Strömung durch den Nebenstromkanal stören und den Wirkungsgrad der Fluggasturbine minimieren. Weiterhin ergeben sich durch die erschwerte Zugangsmöglichkeit zu dem Kerntriebwerk weitere Nachteile, insbesondere bei der Wartung. Im Hinblick auf den komplexen Aufbau des Hebelmechanismus sowie der gesamten Schubumkehrvorrichtung ergibt sich ein hoher fertigungstechnischer Aufwand, der in hohen Kosten resultiert.

Die US 2009/0301056 A1 zeigt eine Konstruktion, bei welcher die Umlenkelemente oder Strömungsleitelemente geradlinig in einem Winkel zur Axialachse des Triebwerks verschoben werden. Auch hierbei ist es erforderlich, die Geometrie der Verkleidung des Kerntriebwerks so zu modifizieren, dass eine vollständige Strömungsumleitung erfolgen kann. Hierdurch ergeben sich Nachteile hinsichtlich der Leistung im Vorwärtsschubbetrieb.

Ferner zeigt FR 2 922 981 A1 eine Schubumkehrvorrichtung mit einer beweglichen Triebwerkverkleidung, welche mittels eines zweistufigen linearen Aktuators verstellbar ist.

Aus der WO 2008/045056 A1 ist weiterhin eine Fluggasturbine mit Schubumkehr mit einer dreigeteilten Düse bekannt.

Die WO 2010/139877 A1 zeigt weiterhin eine Fluggasturbine mit Schubumkehrvorrichtung mit Umkehrklappen.

Ferner ist aus der EP 1 843 031 A1 eine Schubumkehrvorrichtung mit Blockagetüren und mit einstufigem Antriebselement bekannt.

Der Erfindung liegt die Aufgabe zugrunde, eine Fluggasturbinenschubumkehrvorrichtung der eingangs genannten Art zu schaffen, welche bei einfachem Aufbau und einfacher, kostengünstiger Herstellbarkeit einen hohen Wirkungsgrad aufweist und für unterschiedliche Geometrien von Fluggasturbinen einsetzbar ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass ein hinterer Bereich der Triebwerksverkleidung in Axialrichtung des Triebwerks von einer geschlossenen Vorwärtsposition in eine nach hinten verschobene Schubumkehrposition verschiebbar ist, wodurch sich der erwähnte ringförmige Freiraum ergibt, durch welchen die Schubumkehrströmung radial nach außen und gegen die Flugrichtung ausgeleitet werden kann. Der hintere Bereich der Triebwerksverkleidung ist dabei erfindungsgemäß mit Umlenkelementen und Blockagetüren gekoppelt. Beide sind erfindungsgemäß in der Vorwärtsschubposition vollständig innerhalb des vorderen Bereichs der Triebwerksverkleidung angeordnet. Erfindungsgemäß ist zwischen dem vorderen Bereich der Triebwerksverkleidung und dem hinteren Bereich der Triebwerksverkleidung zumindest ein Antriebselement angeordnet, welches die axiale Verschiebung des hinteren Bereichs der Triebwerksverkleidung bewirkt. Dieses Antriebselement ist erfindungsgemäß als zweistufiges Antriebselement ausgebildet. In einer ersten Stufe erfolgt eine Axialverschiebung über einen vorgegebenen ersten Weg, während in der zweiten Stufe eine Axialverschiebung um den restlichen Weg erfolgt, um auf diese Weise die hintere Triebwerksverkleidung vollständig in Axialrichtung zu verschieben, um den ringförmigen Freiraum freizugeben.

Erfindungsgemäß sind somit sowohl das Antriebselement (oder die mehreren Antriebselemente, abhängig von der jeweiligen Konstruktion,) sowie die Blockagetüren und die Umlenkelemente vollständig in der Triebwerksverkleidung untergebracht, wenn sich diese in der Vorwärtsschubposition befindet. Es ist somit möglich, die radial äußere Wandung eines Nebenstromkanals, welcher das Kerntriebwerk umgibt, so auszubilden, dass keinerlei Bauelemente vorhanden sind, welche die Strömung stören. Es ergibt sich somit eine strömungstechnisch glatte Oberfläche. Der Übergang zwischen dem vorderen, feststehenden Bereich der Triebwerksverkleidung und dem hinteren, verschiebbaren Bereich der Triebwerksverkleidung, ist somit auf einen einzigen ringförmigen Kontaktbereich reduziert, welcher durch geeignete Abdichtung und Ausgestaltung strömungstechnisch glatt sein kann. Hierdurch ist eine optimale Strömungsführung durch den Nebenstromkanal gewährleistet.

Durch die Verwendung eines zweistufigen Antriebselements, welches hydraulisch oder elektrisch ausgebildet sein kann, ist eine exakte zweistufige Bewegung der Elemente der Schubumkehrvorrichtung möglich. In der ersten Stufe sind die Blockagetüren noch nicht verschwenkt, so dass sie den sich bildenden Freiraum noch im Wesentlichen verschließen, so dass ein Großteil der Strömung durch den Nebenstromkanal wie in der Vorwärtsschubposition nach hinten ausströmen kann. Erst in der zweiten Stufe der Bewegung des Antriebselements werden die Blockagetüren in den Nebenstromkanal verschwenkt und blockieren diesen, so dass die Strömung durch den ringförmigen Freiraum radial nach außen gelenkt und durch die Umlenkelemente gegen die Flugrichtung des Flugzeuges geführt werden kann.

In günstiger Weiterbildung der Erfindung ist vorgesehen, dass das Antriebselement teleskopartig ausgebildet ist. Es kann beispielsweise als hydraulische Kolben-Zylinder-Anordnung ausgebildet sein oder beispielsweise eine Zahnstange und ein Ritzel oder Ähnliches umfassen.

Erfindungsgemäß bewirkt das Antriebselement die erwähnte axiale Verschiebung des hinteren Bereichs der Triebwerksverkleidung. Weiterhin bewirkt das Antriebselement eine axiale Verschiebung sowohl der Blockagetüren als auch der Umlenkelemente aus ihrer im vorderen Bereich der Triebwerksverkleidung vorgesehenen Position während der Vorwärtsschubposition der Schubumkehrvorrichtung. Die Blockagetüren und die Umlenkelemente können dabei direkt von dem Antriebselement bewegt und somit mit diesem gekoppelt sein. Es ist auch möglich, diese mit dem hinteren Bereich der axial verschiebbaren Triebwerksverkleidung zu koppeln. Die Verschwenkung der Blockagetüren erfolgt bevorzugterweise automatisch mittels eines Hebelmechanismus oder in ähnlicher Weise. In der ersten Stufe der Verschiebung durch das Antriebselement befinden sich sowohl die Umlenkelemente als auch die Blockagetüren somit in dem ringförmigen Freiraum. Erst in der zweiten Stufe der Axialverschiebung werden die Umlenkelemente vollständig in den ringförmigen Freiraum verschoben. Dies geschieht zeitgleich mit der Verschwenkung der Blockagetüren.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2, 3: perspektivische Ansichten einer erfindungsgemäße Fluggasturbine von schräg vorne in Vorwärtsschubposition bzw. Schubumkehrposition, und
- Fig. 4 bis 6: perspektivische Seitenansichten der unterschiedlichen Positionen der Schubumkehrvorrichtung, wobei die in Fig. 4 gezeigte Ausführungsform nicht unter den Schutzbereich des Anspruchs 1 fällt und nur zur Erläuterung der Erfindung dient.

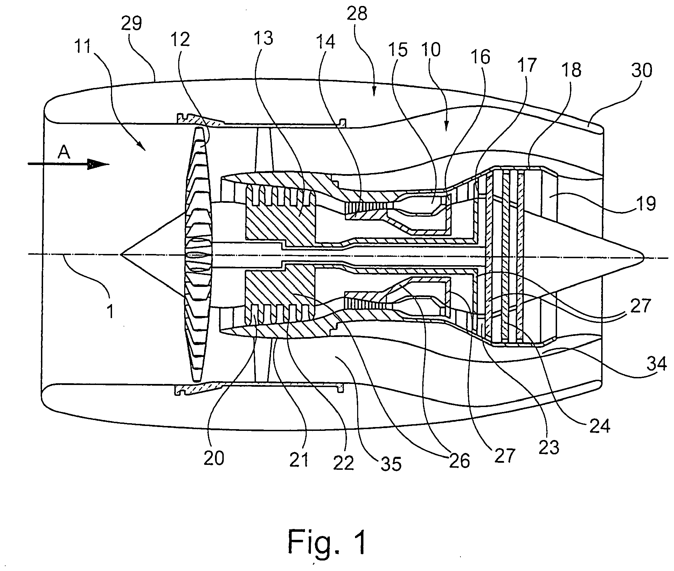

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, eine Ringbrennkammer 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Weiterhin zeigt die Fig. 1 eine Verkleidung 34 eines Nebenstromkanals 35.

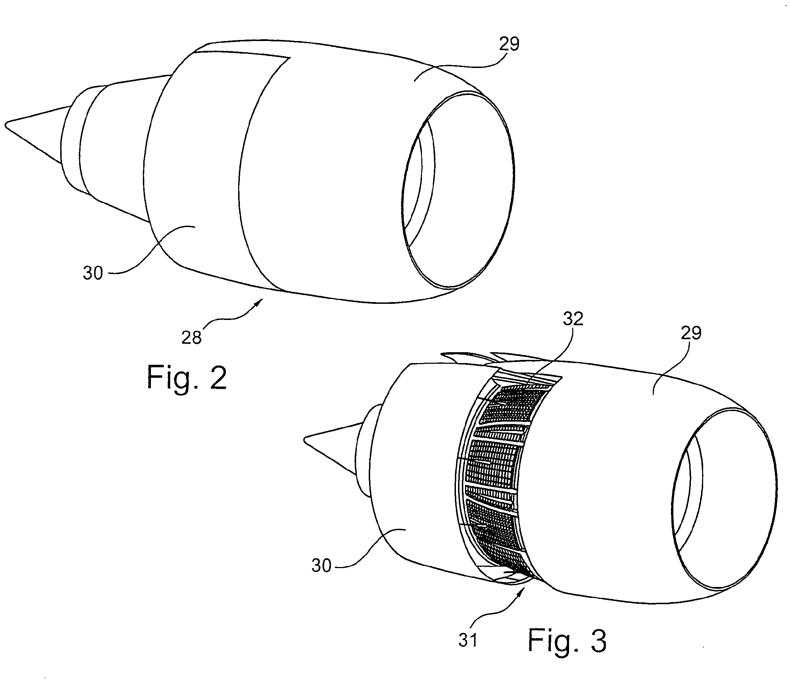

Die Fig. 2 und 3 zeigen jeweils vereinfachte perspektivische Darstellungen der erfindungsgemäßen Fluggasturbine mit Schubumkehrvorrichtung. Die Fig. 2 zeigt eine Vorwärtsschubposition in Ansicht von schräg vorne, in welcher die Verkleidung 28 geschlossen ist, um eine ungestörte Durchströmung des Nebenstromkanals zu ermöglichen. Es ist dabei insbesondere zu erkennen, dass ein vorderer, stationär bleibender Bereich 29 der Verkleidung 28 den ersten Teil der Begrenzung des Nebenstromkanals 37 bildet, während ein hinterer Bereich 30 der Verkleidung 28 in Axialrichtung verschiebbar ist. Die Fig. 2 zeigt somit die Vorwärtsschubposition, während die Fig. 3 die Schubumkehrposition darstellt, in welcher der hintere Bereich 30 der Verkleidung 28 axial verschoben ist. Hierdurch ergibt sich ein ringförmiger Freiraum 31, der lediglich durch den im Einzelnen nicht dargestellten Bereich eines Pylonen zur Aufhängung der Fluggasturbine unterbrochen wird.

Die Umlenkelemente 32 sind gitterartig oder kaskadenartig ausgebildet und umfassen eine Vielzahl von strömungsoptimiert ausgebildeten Leitelementen.

Die Umlenkelemente 32 können beispielsweise als Gussteile oder als Kompositteile gefertigt sein.

In der Beschreibung beziehen sich die Begriffe "vorne" und "hinten" auf die Durchströmungsrichtung der Fluggasturbine, "vorne" entspricht dem Einströmbereich, "hinten" entspricht dem Auslassbereich.

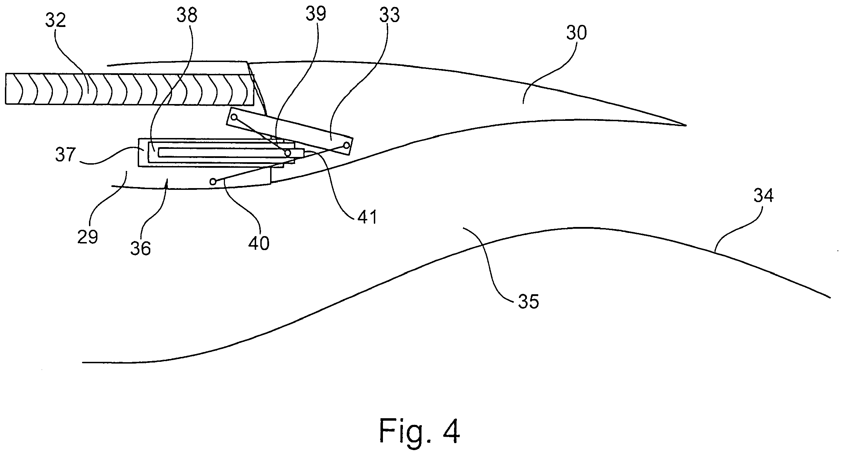

Die Fig. 4 bis 6 zeigen drei unterschiedliche Betriebszustände der erfindungsgemäßen Schubumkehrvorrichtung, wobei die in Fig. 4 gezeigte Ausführungsform nicht unter den Schutzbereich des Anspruchs 1 fällt und nur zur Erläuterung der Erfindung dient. Die Durchströmung erfolgt von links nach rechts, analog der Darstellung in Fig. 1.

Die Fig. 4 zeigt einen Zustand in der Vorwärtsschubposition, bei welchem der vordere Bereich 29 und der hintere Bereich 30 der Triebwerksverkleidung 28 vollständig und dicht gegeneinander anliegen. Es ist dabei insbesondere ersichtlich, dass die Schubumkehrelemente 32 (Kaskaden) und die Blockagetüren 33 vollständig innerhalb der Triebwerksverkleidung aufgenommen sind und somit eine Durchströmung des Nebenstromkanals 35 nicht stören.

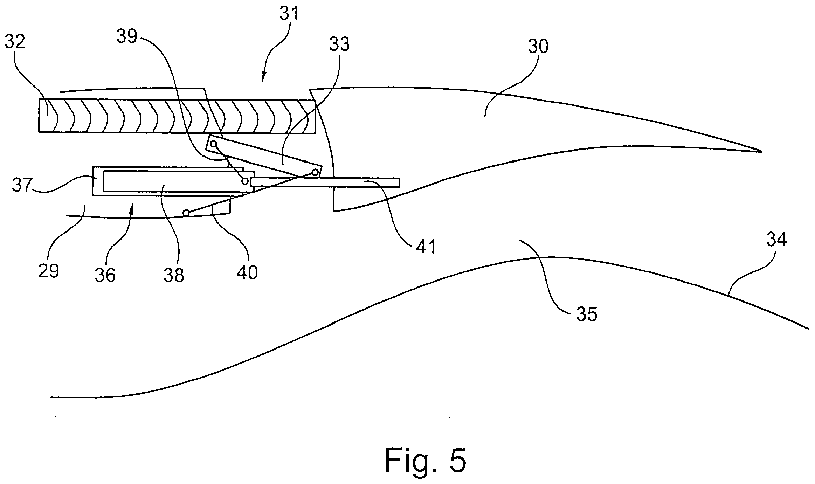

Die Fig. 5 zeigt einen ersten Verschiebezustand, bei welchem der hintere Bereich 30 der Triebwerksverkleidung mittels des Antriebselements 36 um einen ersten Verschiebeweg verschoben wurde. Dabei ist der ringförmige Freiraum 31 in etwa zur Hälfte seiner axialen Länge geöffnet. Die Blockagetüren 33 befinden sich innerhalb des teilweise geöffneten ringförmigen Freiraums 31. Ebenso ist ein Teil der Umlenkelemente 32 in dem teilweise geöffneten ringförmigen Freiraum 31 angeordnet.

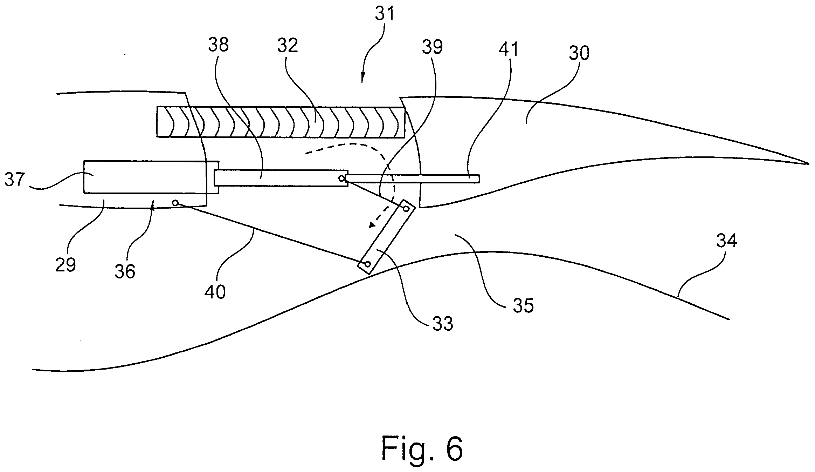

Aus den Darstellungen der Figuren 4 bis 6 ergibt sich, dass das Antriebselement 36 mehrstufig teleskopartig ausgebildet ist, beispielsweise als mehrfache Kolben-ZylinderEinheit. Bei dem in den Figuren 4 bis 6 gezeigten Ausführungsbeispiel ist die Kolben-Zylinder-Einheit so ausgebildet, dass sie einen Hauptzylinder 37 umfasst, welcher fest an dem vorderen Bereich 29 der Verkleidung 28 gelagert ist. In dem Hauptzylinder 37 ist verschiebbar ein Zwischenelement 38 gelagert, welches wie ein doppelt wirkender Kolben verschiebbar ist. An dem freien Ende des Zwischenelements 38 ist gelenkig ein erstes Verbindungselement 39 gelagert, welches an seinem freien Ende gelenkig mit der Blockagetüre 33 verbunden ist. Ein gegenüberliegender Endbereich der Blockagetür 33 ist gelenkig mit einem zweiten Verbindungselement 40 gekoppelt, welches wiederum gelenkig an dem vorderen Bereich 29 der Verkleidung gelagert ist. Durch eine Verschiebung des Zwischenelements 38 erfolgt somit eine Verschwenkung der Blockagetür 33, sowie dies durch die gestrichelte Linie in Figur 6 dargestellt ist.

Das Zwischenelement 38 ist somit sowohl als Kolben, welcher in dem Hauptzylinder 37 ausgebildet ist, als auch als Zylinder ausgestaltet, so dass in dem Zwischenelement 38 verschiebbar ein Kolbenelement 41 aufgenommen ist, welches wie ein doppelt wirkender Kolben in beiden Richtungen relativ zu dem Zwischenelement 38 in diesem bewegbar ist. Das Kolbenelement 41 ist mit dem hinteren Bereich 30 der Verkleidung verbunden. Hierdurch ist eine kompakte Bauweise möglich. Die Umlenkelemente 32 sowie die Blockagetüren 33 sind somit entweder funktionsmäßig mit dem axial verschiebbaren hinteren Bereich 30 der Triebwerksverkleidung 28 gekoppelt oder werden in geeigneter Weise mittels des Antriebselements 36 bewegt.

Die Fig. 6 zeigt den Schubumkehrzustand, in welchem der hintere Bereich 30 der Triebwerksverkleidung 28 vollständig nach hinten verschoben ist, so dass der ringförmige Freiraum 31 vollständig geöffnet ist. Die Umlenkelemente 32 befinden sich vollständig in dem ringförmigen Freiraum 31, um die Schubumkehrströmung umzulenken. Gleichzeitig sind die Blockagetüren 33 in den Nebenstromkanal 35 verschwenkt worden, um diesen zu verschließen. Die Blockagetüren 33 liegen dabei gegen die Kerntriebwerksverkleidung 34 an. Die Verschwenkung der Blockagetüren 33 kann in alternativer Ausgestaltung zu der gezeigten Lösung beispielsweise auch zwangsgesteuert über eine geeignete Kinematik oder einen anderen geeigneten Hebelmechanismus erfolgen.

Die Rückbewegung nach der Landung des Flugzeuges kann mittels des Antriebselements 36 einstufig, wobei diese Ausgestaltung nicht Teil des beanspruchten Gegenstandes ist, oder zweistufig erfolgen.

Es ist ersichtlich, dass bei der erfindungsgemäßen Lösung keinerlei Bauelemente in dem Nebenstromkanal 35 angeordnet sind, welche in der Vorwärtsschubposition die Durchströmung stören oder behindern könnten. Ebenso ist es möglich, den vorderen und den hinteren Bereich der Triebwerksverkleidung in der Vorwärtsschubposition so aneinanderzulegen und abzudichten, dass fast keine Strömungsverluste oder Störungen der Strömung auftreten.

### Bezugszeichenliste:

- 1: Triebwerksachse / Mittelachse
- 10: Gasturbinentriebwerk
- 11: Lufteinlass
- 12: im Gehäuse umlaufender Fan
- 13: Mitteldruckkompressor
- 14: Hochdruckkompressor
- 15: Ringbrennkammer
- 16: Hochdruckturbine
- 17: Mitteldruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -scheibe
- 27: Turbinenrotornabe
- 28: Verkleidung (nacelle)
- 29: Vorderer Bereich der Verkleidung
- 30: Hinterer Bereich der Verkleidung
- 31: Ringförmiger Freiraum
- 32: Umlenkelement (Kaskade)
- 33: Blockagetür
- 34: Kerntriebwerksverkleidung
- 35: Nebenstromkanal
- 36: Antriebselement
- 37: Hauptzylinder
- 38: Zwischenelement
- 39: erstes Verbindungselement
- 40: zweites Verbindungselement
- 41: Kolbenelement

## Patentansprüche

1. Fluggasturbinen-Schubumkehrvorrichtung mit einem Triebwerk (10), mit einer Triebwerksverkleidung (28), deren hinterer Bereich (30) in Axialrichtung des Triebwerks (10) von einer geschlossenen Vorwärtsschubposition in eine nach hinten verschobene Schubumkehrposition verschiebbar ist, in welcher sich ein im Wesentlichen ringförmiger Freiraum (31) zu einem vorderen, feststehenden Bereich (29) der Triebwerksverkleidung (28) ergibt, wobei der hintere Bereich (30) der Triebwerksverkleidung (28) mit Umlenkelementen (32) und Blockagetüren (33) gekoppelt ist, wobei zwischen dem vorderen Bereich (29) und dem hinteren Bereich (30) zumindest ein Antriebselement (36) angeordnet ist, welches die axiale Verschiebung des hinteren Bereichs (30) bewirkt, wobei das Antriebselement (36) zweistufig ausgebildet ist und in einer ersten Stufe eine Axialverschiebung um einen axialen Teilverschiebeweg, und in einer zweiten Stufe eine Axialverschiebung um den vollen axialen Verschiebeweg, bewirkt,
**dadurch gekennzeichnet, dass**
die Umlenkelemente (32) und die Blockagetüren (33) in der Vorwärtsschubposition vollständig innerhalb des vorderen Bereichs (29) der Triebwerksverkleidung (28) angeordnet sind.

2. Vorrichtung nach Anspruch 1, **dadurch gekennzeichnet, dass** das Antriebselement (36) teleskopartig ausgebildet ist.

3. Vorrichtung nach Anspruch 1 oder 2, **dadurch gekennzeichnet, dass** das Antriebselement (36) als hydraulische Kolben-Zylinder-Anordnung ausgebildet ist.

4. Vorrichtung nach einem der Ansprüche 1 bis 3, **dadurch gekennzeichnet, dass** bei der ersten Stufe der Axialverschiebung die Umlenkelemente (32) axial über einen Teil ihrer axialen Länge in den zum Teil geöffneten Freiraum (31) verschiebbar sind.

5. Vorrichtung nach einem der Ansprüche 1 bis 4, **dadurch gekennzeichnet, dass** bei der zweiten Stufe der Axialverschiebung die Blockagetüren (33) axial verschoben und in den zum Teil geöffneten Freiraum (31) verschiebbar sind.

6. Vorrichtung nach einem der Ansprüche 1 bis 5, **dadurch gekennzeichnet, dass** bei der zweiten Stufe der Axialverschiebung die Blockagetüren (33) radial nach innen zur Blockage einer Strömung durch einen Nebenstromkanal (35) verschwenkbar sind.

7. Vorrichtung nach einem der Ansprüche 1 bis 6, **dadurch gekennzeichnet, dass** in der geschlossenen Vorwärtsposition der hintere Bereich (30) der Triebwerksverkleidung dicht gegen den vorderen Bereich (29) der Triebwerksverkleidung anliegt.

## Claims

1. Aircraft gas turbine thrust-reversing device with an engine (10) equipped with an engine cowling (28), the rear area (30) of which being displaceable in the axial direction of the engine (10) from a closed forward thrust position into a rearwardly displaced thrust reversal position, resulting in an essentially annular space (31) to a front, stationary area (29) of the engine cowling (28), with the rear area (30) of the engine cowling (28) being coupled to deflecting elements (32) and blocker doors (33), with at least one drive element (36) being provided between the front area (29) and the rear area (30), which effects the axial displacement of the rear area (30), with the drive element (36) being designed as a two-stage element, and effecting in a first stage an axial displacement by an axial partial displacement path, and in a second stage an axial displacement by the full axial displacement path,
**characterized in that**
the deflecting elements (32) and blocker doors (33) in the forward thrust position are arranged completely inside the front area (29) of the engine cowling (28).

2. Device in accordance with Claim 1, **characterized in that** the drive element (36) is designed telescopic.

3. Device in accordance with Claim 1 or 2, **characterized in that** the drive element (36) is designed as a hydraulic piston/ cylinder arrangement.

4. Device in accordance with one of the Claims 1 to 3, **characterized in that** in the first stage of the axial displacement the deflecting elements (32) are axially moveable over part of their axial length into the partially opened space (31).

5. Device in accordance with one of the Claims 1 to 4, **characterized in that** in the second stage of the axial displacement the blocker doors (33) are axially moved and are displaceable into the partially opened space (31).

6. Device in accordance with one of the Claims 1 to 5, **characterized in that** in the second stage of the axial displacement the blocker doors (33) are swivellable radially inwards for blocking a flow through a bypass duct (35).

7. Device in accordance with one of the Claims 1 to 6, **characterized in that** in the closed forward thrust position the rear area (30) of the engine cowling is in tight contact with the front area (29) of the engine cowling.

## Revendications

1. Inverseur de poussée de turbine à gaz aéronautique avec un moteur (10) doté d'un carénage de moteur (28) dont la zone arrière (30) est déplaçable dans le sens axial du moteur (10), d'une position fermée de poussée en avant vers une position décalée vers l'arrière d'inversion de poussée, dans laquelle un espace libre (31) de forme essentiellement annulaire apparaît par rapport à une zone avant fixe (29) du carénage de moteur (28), sachant que la zone arrière (30) du carénage de moteur (28) est accouplée à des éléments déflecteurs (32) et des portes de blocage (33), sachant qu'entre la zone avant (29) et la zone arrière (30) est disposé au moins un élément d'entraînement (36) qui provoque le déplacement axial de la zone arrière (30), sachant que l'élément d'entraînement (36) a une configuration à deux étages et provoque, dans un premier étage, un déplacement axial selon une course de déplacement axial partielle et, dans un second étage, un déplacement axial selon la course de déplacement axial complète,
**caractérisé en ce que**
dans la position de poussée en avant, les éléments déflecteurs (32) et les portes de blocage (33) sont disposés entièrement à l'intérieur de la zone avant (29) du carénage de moteur (28).

2. Dispositif selon la revendication n° 1, **caractérisé en ce que** l'élément d'entraînement (36) est conçu de manière télescopique.

3. Dispositif selon la revendication n° 1 ou n° 2, **caractérisé en ce que** l'élément d'entraînement (36) est conçu sous forme d'agencement hydraulique piston/ cylindre.

4. Dispositif selon une des revendications n° 1 à n° 3, **caractérisé en ce que** lors du premier étage du déplacement axial, les éléments déflecteurs (32) sont déplaçables axialement sur une partie de leur longueur axiale, dans l'espace libre (31) partiellement ouvert.

5. Dispositif selon une des revendications n° 1 à n° 4, **caractérisé en ce que** lors du second étage du déplacement axial, les portes de blocage (33) sont déplacées axialement et sont déplaçables dans l'espace libre (31) partiellement ouvert.

6. Dispositif selon une des revendications n° 1 à n° 5, **caractérisé en ce que** lors du second étage du déplacement axial, les portes de blocage (33) sont pivotables radialement vers l'intérieur pour bloquer un écoulement à travers le canal de flux secondaire (35).

7. Dispositif selon une des revendications n° 1 à n° 6, **caractérisé en ce que** dans la position fermée de poussée en avant, la zone arrière (30) du carénage de moteur est en contact étanche avec la zone avant (29) du carénage de moteur.
